# EUROPEAN PATENT APPLICATION

(11) **EP 2 410 738 A1**
(43) Date of publication of application: **25.01.2012**
(21) Application number: 10290419.0
(22) Date of filing: 22.07.2010
(51) Int. Cl.: H04N 7/173

(54) **Process for transmitting video contents from a live video source to at least one terminal of a user through a download server**

(71) Applicant: Alcatel Lucent, 75007 Paris (FR)
(72) Inventor: Phan, Cao-Thanh, 35000 Rennes (FR); Jaouen, Laurent, 35000 Rennes (FR)
(74) Representative: Sayettat, Julien Christian

(57) **Abstract**

The invention relates to a process for transmitting video contents from a live video source (1) to at least one terminal (2) of a user through a download server (3), said process enables to:
- receive encoded transport packets (4) of an audio/video live flow from said live video source;
- format said transport packets into Moving Picture Experts Group 2^{nd} generation Transport Stream (MPEG-2 TS) packets;
- create an open-ended media segment (7) from said MPEG-2 TS packets and a playlist file (8) referring to said media segment;
- create a continuous piped stream (10) towards said download server;
- feed said continuous piped stream with transport stream packets comprising said media segment and said playlist file;
- transmit said transport stream packets to the at least one terminal (2).

## Description

The invention relates to a process for transmitting video contents from a live video source to at least one terminal of a user, to an architecture for transmitting video contents from a live video source to at least one terminal of a user, to a remote server and to a download server for such an architecture.

On an advanced and multipurpose mobile terminal, as for example a personal digital assistant (PDA) or a smartphone like the Iphone® of Apple®, a user can receive audio/video contents, especially from a live streaming video source.

The current live streaming protocols for such mobile phones, such as the HTTP (for Hyper Text Transfer Protocol) live streaming protocol imposed by Apple® for receiving live streaming video contents on the Iphone®, rely on division of video contents into discrete video files and HTTP download of said discrete video files from a download server by a mobile terminal, said video files further being formatted in the MPEG-2 TS (for Moving Picture Experts Group 2^{nd} generation Transport Stream) format.

In particular, the HTTP live streaming protocol consists in providing a continuous sequence of media files which are generally ten-seconded segments of a live video content in the MPEG-2 TS format or in the MPEG-2 PS (for Moving Picture Experts Group 2^{nd} generation Program Stream) format, said live video content being stored in a file system of a download server.

Afterwards, the media files are transmitted from the download server to the mobile terminal of a user by the way of a playlist file formatted in the extending file M3U8 (for MPEG version 3.0 Uniform Resource Locator) coding standard, said playlist file comprising some references to the media files. Generally, such a playlist file comprises three references to the media files.

Moreover, as long as the user watches the video content, the playlist file is continuously updated thanks to a sliding window mechanism, which enables to feed the player application implemented in the mobile terminal of said user with fresh media files.

Usual use of those above mentioned protocols imposes to buffer three of the received transport streams into a file system of the download server before allowing the display of the video content on the mobile terminal. Such a constraint triggers a significant offset not only between a live video source and a live video content watched by a user on his mobile terminal, but also between a live video content watched by two different users connected to the same live video source.

This offset can obviously raise some significant problems, especially during live television events such as very short-timed sport events or election results, during video surveillance, or during the transmission of live video contents generated by a user, as for instance during a video conference where the generated live video content further has to be synchronized with a generated live audio content.

Indeed, a user receives the live video content with a delay of a playlist duration, which is generally of thirty seconds, and another user connected to the same live video source at a different moment will always start receiving the live video content at the beginning of a media file segment. Thus the protocol loses the real-time aspect while delivering media.

The invention aims to improve the prior art by proposing a process for transmitting video contents from a live video source to at least one terminal of a user, said process providing for reducing the offset between said live video source and said at least one terminal along with the offset between two terminals receiving video contents from said live video source.

For that purpose, and according to a first aspect, the invention relates to a process for transmitting video contents from a live video source to at least one terminal of a user through a download server, said process enables to:
- receive encoded transport packets of an audio/video live flow from said live video source;
- format said transport packets into Moving Picture Experts Group 2^{nd} generation Transport Stream (MPEG-2 TS) packets;
- create an open-ended media segment from said MPEG-2 TS packets and a playlist file referring to said media segment;
- create a continuous piped stream towards said download server;
- feed said continuous piped stream with transport stream packets comprising said media segment and said playlist file;
- transmit said transport stream packets to the at least one terminal.

According to a second aspect, the invention relates to an architecture for transmitting video contents from a live video source to at least one terminal of a user, said architecture comprising:
- a remote server comprising:
   ■ a MPEG-2 TS gateway module comprising means for receiving encoded transport packets of an audio/video live flow from said live video source and means for formatting said packets into MPEG-2 TS packets;
   ■ a segmenter comprising means for creating an open-ended media segment from said MPEG-2 TS packets and means for creating a playlist file referring to said media segment;
- a download server comprising a download servlet which comprises means for receiving a continuous piped stream from the remote server, said piped stream being fed by transport stream packets comprising the open-ended media segment and the playlist file, and means for transmitting said transport stream packets to the at least one terminal.

According to a third aspect, the invention relates to a remote server comprising:
- a MPEG-2 TS gateway module comprising means for receiving encoded transport stream packets of an audio/video live flow from a live video source and means for formatting said packets into MPEG-TS packets;
- a segmenter comprising means for creating an open-ended media segment from said MPEG-2 TS packets and means for creating a playlist file referring to said media segment;
- means for creating a continuous piped stream towards a download server and means for feeding said piped stream by transport stream packets comprising the media segment and the playlist file.

According to a fourth aspect, the invention relates to a download server comprising a download servlet which comprises means for receiving a continuous piped stream from such a remote server, said piped stream being fed by transport stream packets comprising an open-ended media segment and a playlist file referring to said media segment, and means for transmitting said transport stream packets to at least one terminal.

Other aspects and advantages of the invention will become apparent in the following description made with reference to the appended figures, wherein:
- figure 1 is a schematic representation of an embodiment of the implementation of the process according to the invention;
- figure 2 gathers a schematic representation of an architecture according to the invention (top) and a diagram representing the implementation of a process in said architecture (bottom).

In relation to those figures, a process for transmitting video contents from a live video source 1 to at least one terminal 2 of a user through a download server 3 is described.

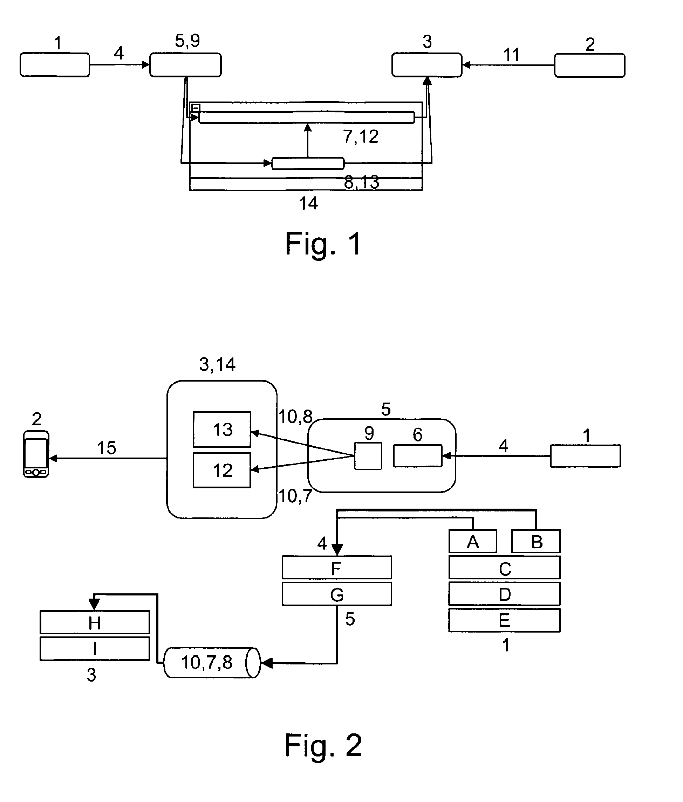

On figure 2, the terminal 2 is a smartphone, as the Iphone® of Apple®, but it can also be a Personal Digital Assistant (PDA), or another type of mobile phone. The terminal 2 comprises a client player application which is adapted for displaying video contents downloaded from the download server 3 on the screen of said terminal.

According to an embodiment, a user who wants to watch a video content on his terminal 2 opens a session between said terminal and the download server 3 providing said video content. For example, the terminal 2 can use the Hyper Text Transfer Protocol (HTTP) for opening such a session.

The process enables to receive transport packets 4 of an audio/video live flow from the live video source 1 and to format said transport packets into Moving Picture Experts Group 2^{nd} generation Transport Stream (MPEG-2 TS) packets.

To do so, the live video source 1 comprises means for encoding such an audio/video live flow into transport packets 4 and means to send said transport packets to a remote server 5 of the architecture, said remote server comprising a MPEG-2 TS gateway module 6 which comprises means for receiving the encoded transport packets 4 and means for formatting said packets into MPEG-2 TS packets.

In relation to diagram at the bottom of figure 2, the means for encoding of the live video source 1 can be adapted to encode both video and audio flows of a live audio/video live flow respectively into the H.264 video coding standard A and the Advanced Audio Coding (AAC) audio coding standard B.

Moreover, the means for encoding of the live video source 1 can be adapted to encapsulate both encoded audio and video flows into transport packets 4, said packets being for example Real time Transport Protocol (RTP) C packets, User Datagram Protocol (UDP) D packets, or other types E of Internet Protocol (IP) transport packets.

Besides, the means for formatting of the MPEG-2 TS module 6 can be adapted for encoding the received transport packets 4 into Packetized Elementary Stream (PES) F packets or into Transport Stream (TS) G packets and for encapsulating said packets into MPEG-2 TS packets.

In particular, the process enables to create an open-ended media segment 7 from the MPEG-2 TS packets and a playlist file 8 referring to said media segment. For example, the playlist file 8 can be formatted into the M3U8 extension file format (for MPEG version 3.0 Uniform Resource Locator).

To do so, the remote server 5 comprises a segmenter 9 which comprises means for creating an open-ended media segment 7 from the MPEG-2 TS packets provided by the MPEG-2 TS gateway module 6 and means for creating a playlist file 8 referring to said media segment.

The use of such an open-ended media segment 7, which is updated in real time as the remote server 5 receives encoded transport packets 4 from the live video source 1, permits to get rid of the transient file segments of the prior art and thus to reduce the above described offsets.

The process further enables to create a continuous piped stream 10 towards the download server 3 and to feed said continuous piped stream with transport stream packets comprising the media segment 7 and the playlist file 8.

To do so, the remote server 5 comprises means for creating such a continuous piped stream 10 towards the download server 3, said download server also comprising a download servlet which comprises means for receiving said continuous piped stream, and means for feeding said continuous piped stream with such transport stream packets.

In relation to figure 1, the creation of the continuous piped stream 10 can be initiated by the sending of a request 11 from the terminal 2 to the download server 3, the remote server 5 further comprising means for creating such a continuous piped stream 10 towards the download server 3 upon the reception by said download server of such a request 11.

For example, if the user of a terminal 2 opened a HTTP session between said terminal and the download server 3, the request 11 sent by said terminal to said download server can be a GET request.

When a terminal 2 sends a request 11 to the download server 3 for watching a live video content, said download server sends a notification (not shown) to the remote server 5 which receives in real time the encoded transport packets 4 of the audio/video live flow of said video content from the live video source 1.

In response, the remote server 5 creates a continuous piped stream 10 towards the download server 3 and feeds said continuous piped stream with transport stream packets comprising the open-ended media segment 7 from transport packets 4 and the playlist file 8 referring to said media segment, said media segment and said playlist file being created in real time during the reception of the transport packets 4 by the remote server 5.

The process further enables to transmit the transport stream packets comprising the media segment 7 and the playlist file 8 to the terminal 2; the download servlet of the download server 3 further comprising means for such a transmission.

The download servlet of the download server 3 can also comprise means for storing the received media segment 7 and playlist file 8 in folders 12, 13 of the Random Access Memory (RAM) file system 14 of the download server 3, the means for transmitting of said download servlet being adapted for conveying said media segment and said playlist file to the terminal 2 through said RAM file system.

In relation to figure 2, the means for transmitting of the download servlet can be adapted for sending a response 15 to the terminal 2, the media segment 7 and the playlist file 8 being inserted in said response. For example, if the session between the terminal 2 and the download server 3 is a HTTP session, the response 15 can be a HTTP GET H response. The response 15 can also be of another type of Internet Protocol I response.

Upon the reception of the response 15, the client player application of the terminal 2 stores the media segment 7 and the playlist file 8 in a jitter buffer module (not shown) and starts to display the video content almost immediately, when said jitter buffer module is fully filled with a few seconds of data from the stored open-ended media segment 7.

According to an embodiment, the transport stream packets can be transmitted to the terminal 2 over a HTTP chunked mode. To do so, the means for transmitting of the download servlet can be adapted for transmitting the transport stream packets over such a mode.

In this embodiment, the transmission rate of the transport stream packets to the terminal 2 is as smooth as the frame arrival rate on the client player application and there is just a little buffering into said application in order to rebuild the video content from the transport stream packets.

Moreover, the formatting of the transport packets 4 into MPEG-2 TS packets only takes few milliseconds, which is insignificant regarding the time of buffering into the jitter buffer module of the client player application of the terminal 2.

Consequently, the process provides for transmitting live video content over a streaming protocol which is comparable to the RTP protocol in terms of delay between the display of the live video content and the related display on the terminal 2 of a user.

Besides, the process provides for a synchronized display of a live video content from a same live video source 1 on two different terminals 2, and the offset between the beginning of the respective sessions of said terminals and the download server 3 is almost insignificant.

Eventually, the transmission of the transport stream packets to the terminal 2 is continuously made by the means for transmitting of the download servlet until the user of the terminal 2 ends the client player application on said terminal. Thus, the user stops the session between his terminal 2 and the download server 3.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for transmitting video contents from a live video source (1) to at least one terminal (2) of a user through a download server (3), said process enables to:
- receive encoded transport packets (4) of an audio/video live flow from said live video source;
- format said transport packets into Moving Picture Experts Group 2^{nd} generation Transport Stream (MPEG-2 TS) packets;
- create an open-ended media segment (7) from said MPEG-2 TS packets and a playlist file (8) referring to said media segment;
- create a continuous piped stream (10) towards said download server;
- feed said continuous piped stream with transport stream packets comprising said media segment and said playlist file;
- transmit said transport stream packets to the at least one terminal (2).

2. Process for transmitting according to claim 1, **characterized in that** the creation of the continuous piped stream (10) is initiated by the sending of a request (11) from the at least one terminal (2) to the download server (3).

3. Process for transmitting according to claim 1 or 2, **characterized in that** the transport stream packets are transmitted to the at least one terminal (2) over a Hyper Text Transfer Protocol (HTTP) chunked mode.

4. Architecture for transmitting video contents from a live video source (1) to at least one terminal (2) of a user, said architecture comprising:
- a remote server (5) comprising:
■ a MPEG-2 TS gateway module (6) comprising means for receiving encoded transport packets (4) of an audio/video live flow from said live video source and means for formatting said packets into MPEG-2 TS packets;
■ a segmenter (9) comprising means for creating an open-ended media segment (7) from said MPEG-2 TS packets and means for creating a playlist file (8) referring to said media segment;
- a download server (3) comprising a download servlet which comprises means for receiving a continuous piped stream (10) from the remote server (5), said piped stream being fed by transport stream packets comprising the open-ended media segment (7) and the playlist file (8), and means for transmitting said transport stream packets to the at least one terminal (2).

5. Architecture according to claim 4, **characterized in that** the remote server (5) comprises means for creating a continuous piped stream (10) towards the download server (3) upon the reception by said download server of a request (11) from the at least one terminal (2).

6. Architecture according to claim 4 or 5, **characterized in that** the means for transmitting are adapted for transmitting the transport stream packets to the at least one terminal (2) over a HTTP chunked mode.

7. Remote server (5) comprising:
- a MPEG-2 TS gateway module (6) comprising means for receiving encoded transport stream packets (4) of an audio/video live flow from a live video source (1) and means for formatting said packets into MPEG-TS packets;
- a segmenter (9) comprising means for creating an open-ended media segment (7) from said MPEG-2 TS packets and means for creating a playlist file (8) referring to said media segment;
- means for creating a continuous piped stream (10) towards a download server (3) and means for feeding said piped stream by transport stream packets comprising the media segment (7) and the playlist file (8).

8. Remote server (5) according to claim 7, **characterized in that** it comprises means for creating a continuous piped stream (10) towards a download server (3) upon the reception by said download server of a request (11) from at least one terminal (2).

9. Download server (3) comprising a download servlet which comprises means for receiving a continuous piped stream (10) from a remote server (5) according to claim 7 or 8, said piped stream being fed by transport stream packets comprising an open-ended media segment (7) and a playlist file (8) referring to said media segment, and means for transmitting said transport stream packets to at least one terminal (2).

10. Download server (3) according to claim 9, **characterized in that** the means for transmitting are adapted for transmitting the transport stream packets to the at least one terminal (2) over a HTTP chunked mode.
